# EUROPEAN PATENT APPLICATION

(11) **EP 4 501 469 A1**
(43) Date of publication of application: **05.02.2025**
(21) Application number: 23778717.1
(22) Date of filing: 11.01.2023
(51) Int. Cl.: B05D 1/28, B05D 3/00, B05D 7/00, B05D 7/24, C09D 201/00, C09D 7/61

(54) **COATING METHOD AND SHEET MATERIAL**

(30) Priority: 31.03.2022 JP 2022060185
(71) Applicant: NHK Spring Co., Ltd., Yokohama-shi, Kanagawa 236-0004 (JP)
(72) Inventor: SHIMOMURA, Kohei, Yokohama-shi, Kanagawa 236-0004 (JP); MIZUNO, Katsumi, Yokohama-shi, Kanagawa 236-0004 (JP); TOGA, Takashi, Yokohama-shi, Kanagawa 236-0004 (JP); TEZUKA, Makoto, Yokohama-shi, Kanagawa 236-0004 (JP)
(74) Representative: TBK
(86) International application number: PCT/JP2023/000368
(87) International publication number: WO 2023/188677

(57) **Abstract**

Proposed is a coating method capable of suppressing coating film unevenness and suppressing coating film thickness variation when a coating film is formed on the surface of a substrate by using a coating liquid in which the content ratio of a filler is increased.

A coating method including: using a coating apparatus (1) including a conveying roller (2) that feeds a substrate (W); a knife coater (3) that is disposed with a gap from the conveying roller (2) and provided with a knife portion (3b); and a liquid-reserving member (4) having a one end portion (4a) positioned on a side of the conveying roller (2) and partitioning a liquid-reserving space (S) together with the conveying roller (2), to form a coating film (C) on a surface of the substrate (W), wherein the coating liquid (L) contains a resin, a solvent, and a filler, and the filler is contained in a content ratio of 65 to 95 parts by mass with respect to 100 parts by mass of a mixture of the resin and the filler, an outer diameter D1 of the conveying roller (2) is 50 to 270 mm, an outer diameter D2 of the knife coater (3) is 50 to 170 mm, and a distance D3 from the gap to the one end portion (4a) is 1 to 120 mm.

## Description

### Technical Field

The present invention relates to a coating method and a sheet material.

### Background Art

Conventionally, various circuit boards have been used. For example, Patent Literatures 1 and 2 show a circuit board in which a circuit pattern is laminated on a base substrate with an insulating layer interposed therebetween. The insulating layer has a role of securing a withstand voltage between the base substrate and the circuit pattern. When the insulating layer contains a filler, the filler can ensure thermal conductivity of the insulating layer. According to such a circuit board, heat generated by an electronic component provided on the circuit pattern and transferred to the circuit pattern can be transmitted to the base substrate via the insulating layer and released from the base substrate to the outside.

The insulating layer can be obtained, for example, by preparing a sheet material in which a coating film of a composition for forming an insulating layer is formed on the surface of a substrate such as a PET film, and thermally transferring the coating film of the sheet material to the base substrate or the circuit pattern. A coating apparatus and a coating method to form the coating film on the surface of the substrate are disclosed in, for example, Patent Literature 3.

### Citation List

### Patent Literature

Patent Literature 1: JP 2009-246079 A
Patent Literature 2: JP 2013-254921 A
Patent Literature 3: JP 4857217 B2

### Summary of Invention

### Technical Problem

By the way, in recent years, as electronic devices have been advanced in high performance and downsizing, electronic components have an increasing heat generation amount. Accordingly, heat dissipation of an insulating layer is regarded as important. The inventor of the present application conducted studies on this point, and found that an insulating layer having excellent heat dissipation can be obtained when the composition for forming an insulating layer contains a filler in a content ratio greatly higher than before. However, when a coating film is provided on the surface of a substrate by using such a coating liquid in which the content ratio of a filler is increased, conventional coating methods as shown in Patent Literature 3 have difficulties in mass production because the coating film has unevenness in appearance and the coating film has a large film thickness variation.

In view of such problems, an object of the present invention is to provide a coating method capable of suppressing coating film unevenness and suppressing coating film thickness variation when a coating film is formed on the surface of a substrate by using a coating liquid in which the content ratio of a filler is increased, and a sheet material obtained by the coating method.

### Solution to Problem

The present invention is a coating method including: using a coating apparatus including a conveying roller that feeds a substrate that is wound and has an elongated shape; a knife coater that is disposed above the conveying roller with a gap from the conveying roller, has a columnar or cylindrical shape, and is provided with a knife portion; and a liquid-reserving member having a one end portion positioned on a side of the conveying roller and partitioning a liquid-reserving space together with the conveying roller, to form a coating film of a coating liquid stored by the liquid-reserving member on a surface of the substrate, wherein the coating liquid contains a resin, a solvent, and a filler, and the filler is contained in a content ratio of 65 to 95 parts by mass with respect to 100 parts by mass of a mixture of the resin and the filler, an outer diameter of the conveying roller is 50 to 270 mm, an outer diameter of the knife coater is 50 to 170 mm, and a distance from the gap to the one end portion of the liquid-reserving member is 1 to 120 mm.

In the coating method, the solvent is preferably contained in a content ratio of 10 to 50 parts by mass with respect to 100 parts by mass of a mixture of the resin and the filler.

In the coating method, the coating liquid preferably has a viscosity of 100 to 20000 cP at a temperature of 25°C.

In the coating method, preferably, the filler is a mixture of boron nitride and aluminum oxide, and the boron nitride is contained in a content ratio of 60 to 90 parts by mass with respect to 100 parts by mass of a mixture of the boron nitride and the aluminum oxide.

In addition, the present invention is also a sheet material including the substrate and the coating film as described above.

### Advantageous Effects of Invention

The coating method of the present invention is capable of suppressing unevenness of a coating film formed on the surface of a substrate, and suppressing coating film thickness variation, when a coating liquid in which the content ratio of a filler is increased is used.

### Brief Description of Drawings

Fig. 1 is a view illustrating an embodiment of a coating apparatus used in a coating method according to the present invention.
Fig. 2A is a view (gray scale) relating to unevenness of a coating film.
Fig. 2B is a view (gray scale) relating to unevenness of a coating film.
Fig. 2C is a view (a binarized view of Fig. 2A) relating to unevenness of a coating film.
Fig. 2D is a view (a binarized view of Fig. 2B) relating to unevenness of a coating film.
Fig. 3A is a view (gray scale) relating to a cross section of a coating film by SEM analysis.
Fig. 3B is a view (gray scale) relating to a cross section of a coating film by SEM analysis.
Fig. 3C is a view (a binarized view of Fig. 3A) relating to a cross section of a coating film by SEM analysis.
Fig. 3D is a view (a binarized view of Fig. 3B) relating to a cross section of a coating film by SEM analysis.

### Description of Embodiments

Hereinafter, an embodiment of the coating method according to the present invention will be described with reference to the accompanying drawings. Note that the views illustrated in the accompanying drawings are schematic, and the thickness and width of each portion, the ratio between the portions, and the like may be different from those actually implemented.

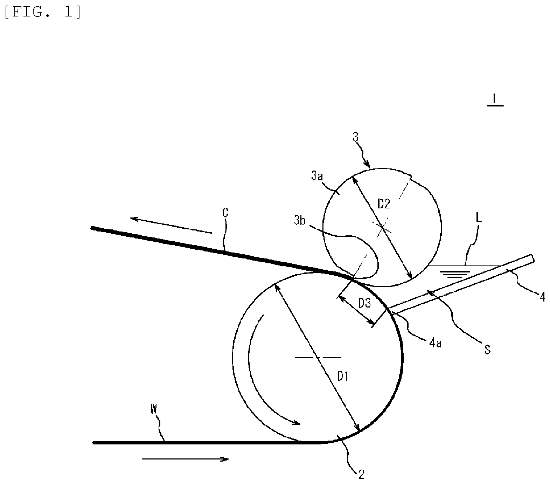

First, the coating apparatus used in the coating method according to the present invention will be described with reference to Fig. 1. In the embodiment, a coating apparatus 1 includes a conveying roller 2, a knife coater 3, and a liquid-reserving member 4, and provides a coating film C on the surface of a substrate W having an elongated shape to form a sheet material including the substrate W and the coating film C.

The conveying roller 2 has a columnar or cylindrical shape, and is configured to rotate in the direction of the illustrated arrow with a motor (not illustrated) or the like. The substrate W is wound around the conveying roller 2, and the substrate W can be fed out with the rotation of the conveying roller 2. In the embodiment, the conveying roller 2 has a length enough to use the substrate W having a width of about 1 m at the maximum. The outer diameter D1 of the conveying roller 2 will be described later.

The knife coater 3 includes a main body 3a having a columnar or cylindrical shape, and a knife portion 3b provided on the outer peripheral surface of the main body 3a. As illustrated in the drawing, the knife portion 3b has an edge-like (sharp) cross-sectional shape, and extends long along the axial direction of the main body 3a. The length of the knife coater 3 is set substantially equal to that of the conveying roller 2. The outer diameter D2 of the knife coater 3 will be described later.

As illustrated in the drawing, the knife coater 3 is held above the conveying roller 2 in a state where the knife portion 3b comes closest to the conveying roller 2 and a gap is made between the tip portion of the knife portion 3b and the outer peripheral surface of the conveying roller 2. The gap is set such that the coating film C having a predetermined thickness is formed on the surface of the substrate W in a state where the substrate W is wound and rotated around the conveying roller 2 (for example, the thickness of the coating film C is about 200 µm).

The liquid-reserving member 4 is disposed in an inclined state with respect to the vertical direction as illustrated in the drawing, and the liquid-reserving member 4 has a one end portion 4a that is positioned on the side of the conveying roller 2. Note that the reference sign D3 shown in Fig. 1 indicates the distance from the gap to the one end portion 4a (the length of a string connecting the portion closest to the knife portion 3b to the portion closest to the one end portion 4a on the outer peripheral surface of the conveying roller 2).

As illustrated in the drawing, the coating apparatus 1 includes a liquid-reserving space S partitioned by the conveying roller 2 and the liquid-reserving member 4. The liquid-reserving space S stores a coating liquid L to form the coating film C. While the coating liquid L is stored in the liquid-reserving space S, the lower portion of the knife coater 3 is immersed in the coating liquid L.

The substrate W is formed of, for example, a peelable PET film or the like.

The coating liquid L contains a resin, a solvent, and a filler. Examples of the resin include thermosetting resins such as an epoxy resin, a phenol resin, a melamine resin, a urea resin, an unsaturated polyester resin, an alkyd resin, and a cyanate resin. In addition, the resin may be other high thermal conductive resins such as a liquid crystal polymer, a resin having a mesogen skeleton, or an engineering plastic such as polycarbonate, nylon, or polyamide. The resins may be used singly or in combination of two or more kinds thereof. As the solvent, for example, a glycol ether-based solvent (examples thereof include ethyl carbitol, methyl carbitol, and butyl carbitol) is used. The filler is preferably one having excellent insulation properties and high thermal conductivity, and examples thereof include aluminum oxide, boron nitride, silica, aluminum nitride, silicon nitride, and magnesium oxide. In addition, for example, an additive (curing agent) that cures the resin as a main agent is contained in the coating liquid L. The curing agent is not particularly limited as long as it is selected according to the type of the resin and reacts with the resin. When an epoxy resin is used, examples of the curing agent include an amine-based curing agent, an imidazole-based curing agent, and a phenol-based curing agent. In addition, a catalyst may be added to accelerate curing of the resin. For example, when an epoxy resin is used, a phosphorus-based, thiol-based, tertiary amine-based, or imidazole-based catalyst may be used. Regarding the content ratio of the resin contained in the coating liquid L, when a curing agent or a catalyst (additive) is used together with the resin (main agent), the content ratio of the resin is calculated including the curing agent and the catalyst.

In the coating liquid L of the embodiment, the filler is contained in a content ratio greatly higher than the content ratio where the insulating layer is formed from the coating film C as usual. Specifically, the filler is contained in a content ratio of 65 to 95 parts by mass with respect to 100 parts by mass of a mixture of the resin and the filler contained in the coating liquid L. When the insulating layer of the circuit board is formed from the coating film C obtained from the coating liquid L by greatly increasing the content ratio of the filler as described above, for example, the thermal conductivity of the insulating layer can be 15 W/mk or more, and high thermal conductivity can be imparted to the insulating layer. In consideration of the quality and productivity when the coating film C is formed from the coating liquid L while securing high thermal conductivity obtained as an insulating layer, the filler is contained in a content ratio of more effectively 70 to 90 parts by mass, and further effectively 75 to 85 parts by mass, with respect to 100 parts by mass of a mixture of the resin and the filler. Regarding the filler, from the viewpoint of the quality of the coating film C and the thermal conductivity of the insulating layer, a mixture of boron nitride and aluminum oxide is preferably used, for example. In this case, the boron nitride is contained in a content ratio of effectively 60 to 90 parts by mass, more effectively 65 to 85 parts by mass, and still more effectively 70 to 80 parts by mass, with respect to 100 parts by mass of a mixture of boron nitride and aluminum oxide.

In view of the quality and productivity of the coating film C, the solvent is contained in a content ratio of preferably 10 to 50 parts by mass, more preferably 20 to 45 parts by mass, and still more preferably 30 to 40 parts by mass, with respect to 100 parts by mass of a mixture of the resin and the filler.

Next, the coating method for forming the coating film C on the surface of the substrate W using the coating apparatus 1 will be described. When the coating method is carried out, the substrate W is wound around the conveying roller 2 as illustrated in Fig. 1, and the coating liquid L is stored in the liquid-reserving space S. Then, a motor (not illustrated) or the like is driven to rotate the conveying roller 2 in the direction of the illustrated arrow. As a result, the substrate W is fed in the direction of the illustrated arrow, and accordingly, the coating liquid L passes through the gap between the conveying roller 2 and the knife coater 3, and the coating film C is formed on the surface of the substrate W.

Conventionally, in the coating apparatus 1, as in the comparative example described later, the diameter D1 of the conveying roller 2 is set to about 300 **mm,** the diameter D2 of the knife coater 3 is set to about 200 **mm,** and the distance D3 from the gap between the conveying roller 2 and the knife coater 3 to the one end portion 4a is set to about 140 mm. When the coating film C is formed on the surface of the substrate W using the coating liquid L in which the content ratio of the filler is increased by using such a coating apparatus 1, the coating film C has unevenness in appearance and the coating film C has an increased film thickness variation. When the coating film C has unevenness, it is difficult to perform automatic foreign matter inspection, which automatically detects foreign matter contained in the coating film C with an appearance inspection machine or the like. Further, when the variation in the film thickness of the coating film C increases, and for example, the coating film C is used as an insulating layer of a circuit board, uniform contact with a base substrate or a circuit pattern may fail to be secured.

As a result of repeated studies on such unevenness and film thickness variation of the coating film C, it is inferred that the coating liquid L used has an increased content ratio of the filler, and otherwise has a reduced content ratio of the resin, which is one of the factors. That is, when the substrate W is fed, the coating liquid L is continuously supplied to the gap between the conveying roller 2 and the knife coater 3. Therefore, in the gap, a compressive force is strongly applied by the sequentially supplied coating liquid L. Here, since the fluidity of the resin is higher than that of the filler, the inventor of the present application has inferred that the compressive force acts to squeeze the resin from the coating liquid L, which leads to occurrence of unevenness and variation in film thickness. In addition, since the content ratio of the filler is increased, it is presumed that one of the factors is that the filler easily settles in the storing liquid-reserving space S.

For this reason, the inventor of the present application considered that the compressive force is reduced by reducing the amount of the coating liquid L supplied to the gap between the conveying roller 2 and the knife coater 3 as much as possible, whereby the mixed state of the resin and the filler is hardly disturbed even when the coating liquid L passes through the gap. That is, the inventors considered that it is effective to reduce the amount of the coating liquid L supplied to the gap between the conveying roller 2 and the knife coater 3 by reducing the outer diameter of the conveying roller 2 and the knife coater 3. In addition, in order to suppress the sedimentation of the filler in the liquid-reserving space S and reduce the amount of the coating liquid L, the inventor considered that it is effective to reduce the volume of the liquid-reserving space S by bringing the liquid-reserving member 4 close to the conveying roller 2.

Further, as a result of repeated studies under such considerations, it has been found that when the outer diameter D1 of the conveying roller 2 is 50 to 270 **mm,** the outer diameter D2 of the knife coater 3 is 50 to 170 mm, and the distance D3 from the gap to the one end portion 4a is 1 to 120 mm, unevenness occurring in the coating film C is suppressed, and film thickness variation of the coating film C is also suppressed. As a result of further studies, it has been found that the outer diameter D1 of the conveying roller 2 is more preferably 75 to 250 mm, and still more preferably 100 to 200 mm in order to suppress the occurrence of such unevenness and suppress the variation in film thickness in the coating film C. It has been also found that the outer diameter D2 of the knife coater 3 is more preferably 75 to 170 mm, and still more preferably 100 to 150 mm. Then, it has been found that the distance D3 from the gap to the one end portion 4a is more preferably 1 to 100 mm, and still more preferably 1 to 50 mm.

The inventor of the present application has also studied the viscosity of the coating liquid L in addition to the study of the diameter D1 and the like of the conveying roller 2 in the coating apparatus 1. This is presumably because the coating liquid L having a reduced viscosity can prevent the coating film C from having unevenness in appearance. However, when the viscosity of the coating liquid L is reduced, sedimentation of the filler is observed in the formed coating film C. For this reason, as a result of repeated studies on the viscosity capable of suppressing sedimentation of the filler while suppressing occurrence of unevenness, it has been found that when the viscosity of the coating liquid L is 100 to 20000 cP at a temperature of 25°C, occurrence of unevenness and sedimentation of the filler can be suppressed. As a result of further studies on this point, it has been found that the viscosity is more preferably 2000 to 10000 cP, and still more preferably 4000 to 6000 cP. The viscosity is a value measured at a shear rate of 8 (1/s) using a B-type viscometer (Brookfield rotational viscometer, digital viscometer DV2T (manufactured by EKO INSTRUMENTS CO.,

### LTD.)).

Examples of the present invention will be described below. Note that the present invention is not limited to Examples.

### Examples

A PET film was prepared as the substrate W. As the coating liquid L, a composition containing a resin (a main agent and an additive (curing agent)), a solvent, and a filler was prepared. The content ratio of each component with respect to the coating liquid L (parts by mass of each component with respect to 100 parts by mass of the coating liquid L) is also shown.
[Main agent]
   Bisphenol A epoxy resin (Trade name: EXA-850CRP; manufactured by DIC Corporation), 11.2 parts by mass
[Curing agent]
   4,4'-diaminodiphenyl sulfone (Trade name: SEIKACURE-S; manufactured by Wakayama Seika Kogyo Co., Ltd.), 4.2 parts by mass
[Solvent]
   Ethyl carbitol (Trade name: ethyl carbitol; manufactured by SANKYO CHEMICAL CO., LTD.), 27.6 parts by mass
[Filler (A)]
   Boron nitride (BN) (Trade name: HP-40, particle shape: aggregation, average particle diameter (d50): 36 µm; manufactured by Mizushima Ferroalloy Co., Ltd.), 43 parts by mass
[Filler (B)]
   Aluminum oxide (Trade name: AS20, particle shape: rounded, average particle diameter (d50): 22 µm; manufactured by SHOWA DENKO K.K.), 14 parts by mass

That is, in the prepared coating liquid L, the content ratio of the filler (A) and the filler (B) is 78.7 parts by mass with respect to 100 parts by mass of the mixture of the resin (main agent and curing agent), the filler (A), and the filler (B), and the content ratio of the solvent is 38.1 parts by mass with respect to 100 parts by mass of the mixture of the resin (main agent and curing agent), the filler (A), and the filler (B). The content ratio of the filler (A) is 75.4 parts by mass with respect to 100 parts by mass of the mixture of the filler (A) and the filler (B).

The viscosity of the coating liquid L is 4300 cP in terms of a value measured at a shear rate of 8 (1/s) using a B-type viscometer (Brookfield rotational viscometer, digital viscometer DV2T (manufactured by EKO INSTRUMENTS CO., LTD.)).

The diameter D1 of the conveying roller 2, the diameter D2 of the knife coater 3, and the distance D3 from the gap between the conveying roller 2 and the knife coater 3 to the one end portion 4a in the coating apparatus 1 are as in Comparative Example and Examples 1 to 3 shown in Table 1 below. When the coating film C was formed from the substrate W and the coating liquid L using the coating apparatuses 1 of Comparative Example and Examples 1 to 3, the results were as shown in Table 1.

**[Table 1]**

| | | | Comparative Example | Example 1 | Example 2 | Example 3 |
|---|---|---|---|---|---|---|
| Coating apparatus | D1(mm) | | 300 | 200 | 200 | 160 |
| | D2(mm) | | 200 | 80 | 120 | 120 |
| | D3(mm) | | 144 | 76.7 | 75 | 50 |
| | Coating width to substrate (mm) | | 510 | 155 | 510 | 510 |
| Coating film | Appearance | | Poor | Good | Good | Excellent |
| | Film thickness (*µ* m) | Average value | 230.0 | 183.1 | 233.8 | 239.6 |
| | | Maximum value | 289.0 | 188.5 | 238.7 | 244.1 |
| | | Minimum value | 208.0 | 180.0 | 231.0 | 237.1 |
| | | Maximum value - Minimum value | 81.0 | 8.5 | 7.7 | 7.0 |

In Table 1, the "Appearance" is rated as follows.

Excellent: Unevenness is hardly observed in the coating film C in appearance.

Good: Some unevenness is observed in the coating film C in appearance.

Poor: Much unevenness is observed in the coating film C in appearance.

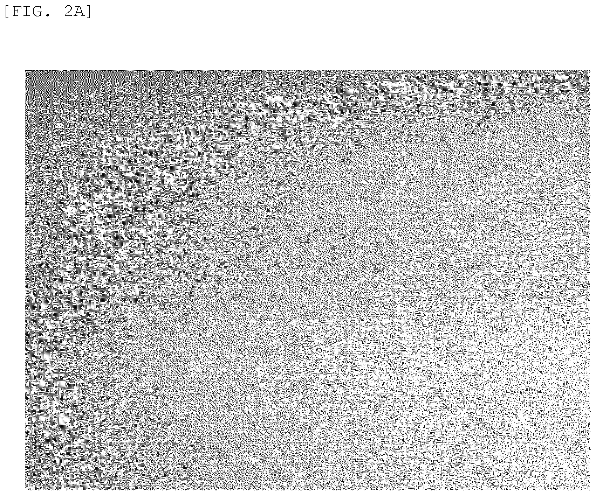

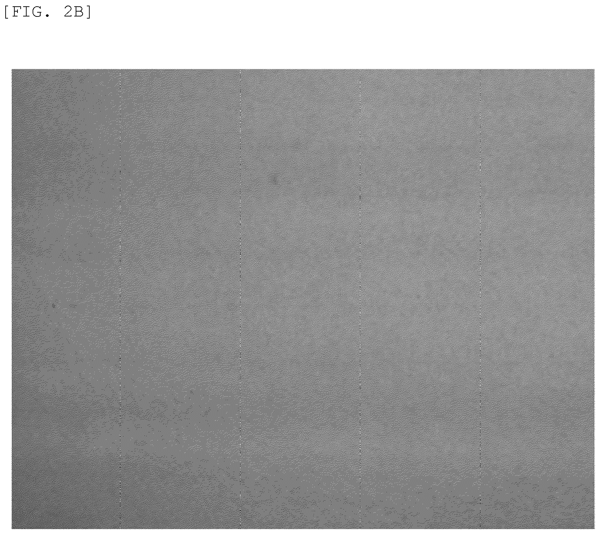

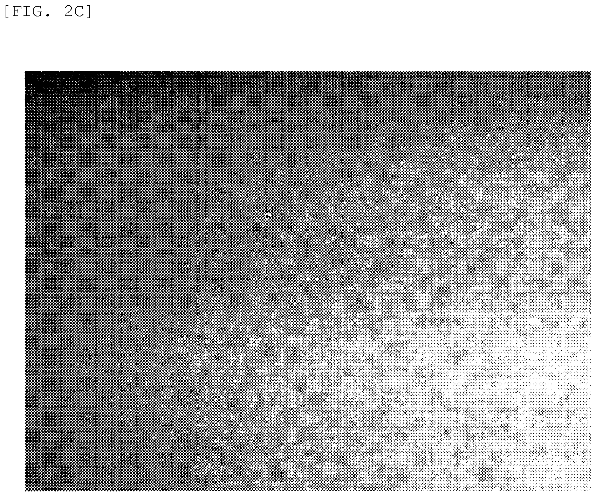

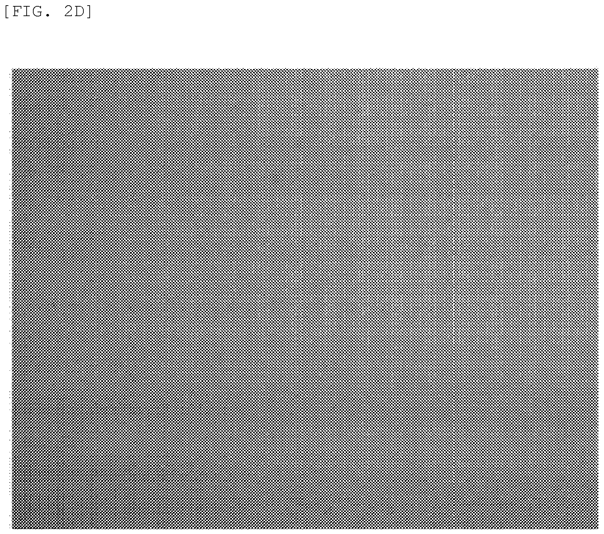

As shown in Table 1, much unevenness was observed in the appearance of the coating film C obtained with the coating apparatus 1 of Comparative Example. Fig. 2A is a photograph of the surface of the coating film C in Comparative Example. Note that Fig. 2A shows this photograph in gray scale, and Fig. 2C shows the same photograph as Fig. 2A in binary. The coating film C of Comparative Example also had a large variation in film thickness. On the other hand, in the coating films C obtained with the coating apparatuses 1 of Examples 1 and 2, unevenness was slightly observed in appearance. The film thickness variation of the coating film C was also sufficiently small. In the coating film C obtained with the coating apparatus 1 of Example 3, unevenness was hardly observed in appearance (See Fig. 2B. Fig. 2B shows a photograph of the surface of the coating film C in gray scale, and Fig. 2D shows the same photograph as Fig. 2B in binary.). Further, the film thickness variation of the coating film C was smaller than those in Examples 1 and 2.

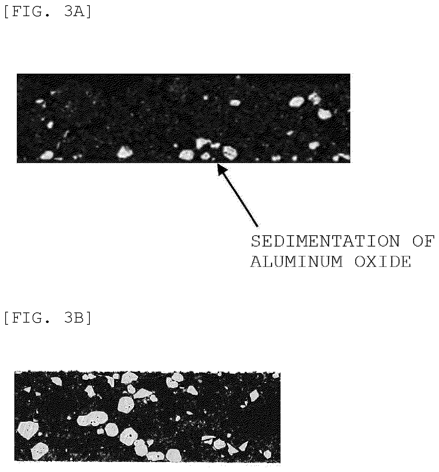

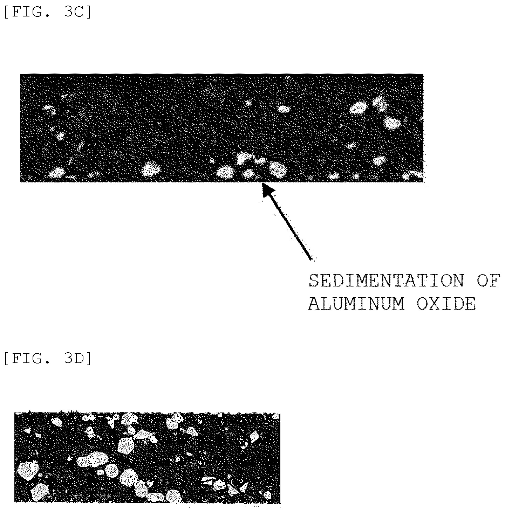

As described above, depending on the viscosity of the coating liquid L, sedimentation of the filler is observed in the formed coating film C. Here, using the coating apparatus 1 of Example 3, the coating film C was formed using the coating liquid L having a reduced viscosity (the amount of the solvent described above was increased, while other components were left as they were to have a viscosity of 3300 cP). When the cross section thereof was observed by SEM, sedimentation of the filler (aluminum oxide) was observed (See Fig. 3A. Fig. 3A shows the SEM observation photograph in gray scale, and Fig. 3C shows the same photograph as Fig. 3A in binary.). On the other hand, the coating film C was obtained with the coating apparatus 1 of Example 3 by using the above-described coating liquid L (viscosity: 4300 cP). When the cross section thereof was observed by SEM, sedimentation of the filler was not observed, and the result was preferable (See Fig. 3B. Fig. 3B shows the SEM observation photograph in gray scale, and Fig. 3D shows the same photograph as Fig. 3B in binary.).

Although an embodiment of the present invention has been described above, the present invention is not limited to the specific embodiment, and various modifications and changes can be made within the scope of the gist of the present invention described in the claims unless otherwise limited in the above description. In addition, the effects of the above embodiment are merely examples of the effects caused by the present invention, and do not mean that the effects of the present invention are limited to the above effects.

For example, when the outer diameter D1 of the conveying roller 2 and the outer diameter D2 of the knife coater 3 are reduced, the rigidity of the conveying roller 2 and the knife coater 3 may be reduced to cause a bend. In such a case, for example, a reinforcing roller to suppress bend may be provided on the side where the conveying roller 2 and the knife coater 3 bend, and the coating film C may be formed with the coating apparatus 1.

### Reference Signs List

- 1: Coating apparatus
- 2: Conveying roller
- 3: Knife coater
- 3b: Knife portion
- 4: Liquid-reserving member
- 4a: One end portion
- C: Coating film
- L: Coating liquid
- S: Liquid-reserving space
- W: Substrate

## Claims

1. A coating method comprising: using a coating apparatus including a conveying roller that feeds a substrate that is wound and has an elongated shape; a knife coater that is disposed above the conveying roller with a gap from the conveying roller, has a columnar or cylindrical shape, and is provided with a knife portion; and a liquid-reserving member having a one end portion positioned on a side of the conveying roller and partitioning a liquid-reserving space together with the conveying roller, to form a coating film of a coating liquid stored by the liquid-reserving member on a surface of the substrate, wherein
the coating liquid contains a resin, a solvent, and a filler, and the filler is contained in a content ratio of 65 to 95 parts by mass with respect to 100 parts by mass of a mixture of the resin and the filler,
an outer diameter of the conveying roller is 50 to 270 mm,
an outer diameter of the knife coater is 50 to 170 mm, and
a distance from the gap to the one end portion of the liquid-reserving member is 1 to 120 mm.

2. The coating method according to claim 1, wherein the solvent is contained in a content ratio of 10 to 50 parts by mass with respect to 100 parts by mass of a mixture of the resin and the filler.

3. The coating method according to claim 1 or 2, wherein the coating liquid has a viscosity of 100 to 20000 cP at a temperature of 25°C.

4. The coating method according to any one of claims 1 to 3, wherein
the filler is a mixture of boron nitride and aluminum oxide, and
the boron nitride is contained in a content ratio of 60 to 90 parts by mass with respect to 100 parts by mass of a mixture of the boron nitride and the aluminum oxide.

5. A sheet material comprising the substrate and the coating film according to any one of claims 1 to 4.
